# EUROPEAN PATENT SPECIFICATION

(11) **EP 0 319 290 B1**
(45) Date of publication and mention of the grant of the patent: **15.09.1993**
(21) Application number: 88311382.1
(22) Date of filing: 01.12.1988
(51) Int. Cl.: C08L 101/00, C08G 77/46

(54) **Resin composition**
Harzzusammensetzung
Composition de résines

(30) Priority: 04.12.1987 JP 307198/87
(43) Date of publication of application: 07.06.1989
(73) Proprietor: POLYPLASTICS CO. LTD., Higashi-ku Osaka-shi Osaka (JP)
(72) Inventor: Nakane, Toshio, Fuji-shi Shizuoka (JP); Kageyama, Yukihiko, Fujinomiya-shi Shizuoka (JP); Hijikata, Kenji, Minshima-shi Shizuoka (JP)
(74) Representative: Jackson, Peter

(56) References cited:
- EP-A- 0 273 636
- EP-A- 0 297 909
- GB-A- 1 036 081
- PATENT ABSTRACTS OF JAPAN, vol. 9, no. 211 (C-300)[1934], 29th August 1985; & JP-A-60 076 523
- CHEMICAL ABSTRACTS, vol. 84, 1976, page 47, abstract no. 45303b, Columbus, Ohio, US; & JP-A-75 121 344

## Description

The present invention relates to a synthetic resin. More particularly, the present invention relates to a composite resin composition in which a modifier is dispersed in order to improve, for example, the toughness and abrasion resistance of the resin composition.

Engineering plastics such as polyacetal resins; aromatic thermoplastic polyesters such as polyethylene terephthalate and polybutylene terephthalate; thermoplastic polyamides such as nylon 6 and nylon 6,6; and polyesteramides which are copolymers of the above mentioned polymers are widely used as resins having excellent tensile strength, tear strength, resilience, cold resistance and bending resistance. Attempts have been made to add various substances to the resin to form a composition having modified properties and improved functions. It is known that when a solid filler is to be used, coupling agents and some surfactants are also used in order to improve the compatibility of the surface of the filler with the matrix resin or to obtain a homogeneous dispersion.

However, when the modifiers are resins or liquid substances, they have solubility parameters d which may be different from one another and, therefore, the compatibility of them with one another can be so poor that no homogeneous dispersion can be obtained in many cases.

In such a case, the above-described coupling agents are useless and ordinary surfactants have a poor heat stability and are unsuitable for the resins called engineering plastics which require processing at a high temperature. Particularly when an oily substance or the like is to be dispersed, it cannot be dispersed in a large amount and is separated to cause bleeding. Even when it is used in a small amount, no homogeneous dispersion can be obtained, the appearance of the product is impaired, the physical properties thereof are not uniform and mechanical strengths thereof tend to be reduced. Also when polymers containing such substances are blended together, uniform dispersion cannot be easily obtained and the surface peeling phenomenon is caused and uniform mechanical strengths cannot be easily obtained.

Processes for solving these problems have been proposed. They include, for example, a process wherein a block copolymer having a segment which is the same as that of the substance to be incorporated therein is used and a process wherein the substances to be incorporated are bonded together by, for example, an exchange reaction on the surface thereof to improve the surface affinity. However, these processes lack versatility, because the substances to be incorporated are limited, other substances cannot be treated by these processes and different formulations are necessary depending on the substances to be incorporated.

In our European patent application No 0 297 909 A2 published on 4th January 1989, we have described a silicon containing polyacetal copolymer which comprises 50 to 99.999 per cent of a polyacetal segment bonded covalently to 0.001 to 50 per cent by weight of a silicone oil unit having at least one reactive terminal group and designated by the general formula: 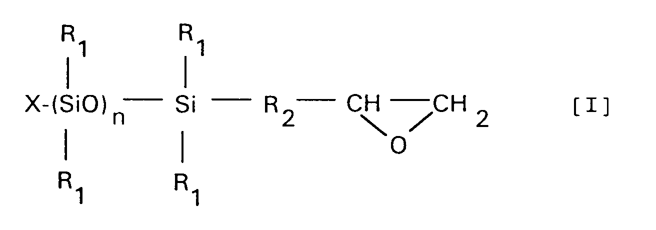
wherein R₁ denotes an alkyl or phenyl group, R₂ and R₃ each denote a divalent organic group, X represents a group selected from -NH₂, 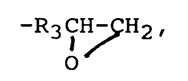
-R₄OH, -R₅COOH, -R₆COOR₇, -R₈ and -OR₉,
R₄ to R₆ each denote an alkylene group having 1 to 10 carbon atoms,
R₇ to R₉ each denote an alkyl group having 1 to 10 carbon atoms and
n represents a number from 5 to 1000,
In our European patent application No 0 273 636 A2 published on 6th July 1988, we have described a synthetic resin composition which comprises a synthetic resin having a solubility parameter d of at least 9.5 cal^{1.2}.cm^{-3/2}, a modifier having a solubility parameter d of not more than 8.5 cal^{1/2}.cm^{-3/2}, both the synthetic resin and modifier having been dispersed with each other, and a silicon-containing copolyester, being a block copolymer consisting of 1 to 99% by weight of a siloxane segment represented by the undermentioned general formula [II] and 99 to 1% by weight of a polyester segment represented by the undermentioned general formula [III], the degree of polymerization of the siloxane segment being 1 to 2000, and that of the polyester segment 1 to 1000, is added to be mixed therewith as a dispersibility improver: 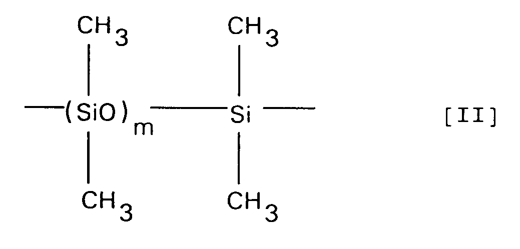
(in this formula, m denotes a number of 1 to 2,000), or: 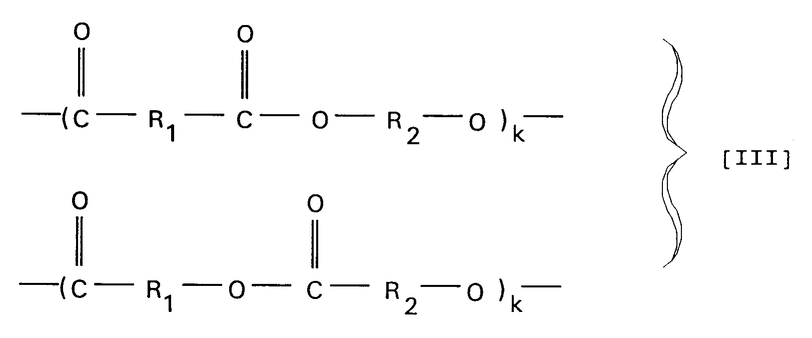
(In this formula, R₁ designates one or two or more members selected from among aromatic divalent radicals having 6 to 12 carbon atoms or aliphatic divalent radicals having 4 to 20 carbon atoms, and R₂ from among aromatic divalent radicals having 6 to 20 carbon atoms or aliphatic divalent radicals having 2 to 20 carbon atoms, and k stands for a number of 1 to 1,000.)

The present invention is based upon further research into the problem of achieving good dispersibility of resins and resin modifiers having differing solubility parameters δ.

An object of the present invention is to provide a resin composition having a high toughness and excellent abrasion resistance, which is prepared by melt-blending to obtain a homogeneous dispersion without causing bleeding or reduction in mechanical and physical properties.

After intensive investigations made under these circumstances, the inventors have found that specified siloxane copolymers are not decomposed even at a high temperature, that they have such a surface-activating effect that they can be used widely for various materials to be incorporated and that they are capable of forming a homogeneous dispersion even with a substance having a solubility parameter far different from that of them. The present invention has been completed on the basis of these findings.

The present invention provides to a resin composition comprising a resin (A) having a solubility parameter d of at least 9.5 cal^{1/2}.cm^{-3/2} in which a modifier (B) having a solubility parameter d of not higher than 8.5 cal^{1/2}.cm^{-3/2} is dispersed to form a dispersion, characterized by containing a dispersibility improver (C) comprising a silicon-containing polyacetal copolymer prepared by covalently bonding 0.01 to 30 wt.% of a terminal-reactive silicone oil of the following general formula [I]: 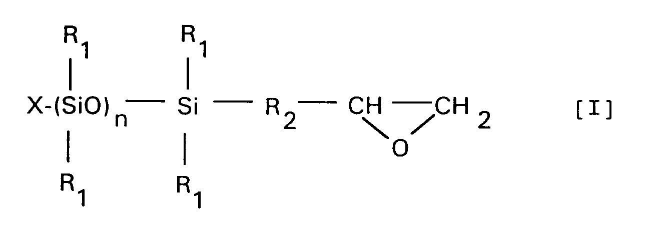
wherein R₁ represents an alkyl or phenyl group,
R₂ represents a divalent organic group,
X represents a group selected from the group consisting of -NH₂, -OH, 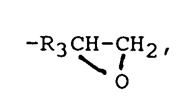
-R₄OH, -R₅COOH, -R₆COOR₇,
-R₈ and -OR₉,
R₃ represents a divalent organic group,
R₄ to R₆ each represent an alkylene group having 1 to 10 carbon atoms,
R₇ to R₉ each represent an alkyl group having 1 to 10 carbon atoms and
n represents a number of 5 to 1000,
with 99.99 to 70 wt.% of a polyacetal segment which is other than resin (A) and other than modifier (B), the degree of polymerization of the siloxane segment (n in the formula [I]) being 5 to 1,000 and the degree of polymerization of the polyacetal segment being 5 to 2,000, in which the weight ratio of (A) to (B) is 99.9 to 85/0.1 to 15 and the amount of (C) is 0.01 to 5 parts by weight for 100 parts by weight in total of (A) and (B) and wherein the modifier (B) is one or more homopolymers selected from the group consisting of polytetrafluoroethylene, polychlorotrifluoroethylene, fluororubber, polydimethylsilicone, polyalkylsiloxanes, polyphenylsiloxane, silicone rubber, butyl rubber, polyisobutylene, polyethylene, ethylene/propylene rubber and polypropylene and/or a copolymer comprising at least one of the monomer units forming these polymers, or a fluorocarbon oil, silicone oil or mineral oil having a molecular weight of 200,000 or less.

The polyacetal segments (C) herein comprise polyoxymethylene units as the main skeleton. They are homopolymers formed by polymerizing formaldehyde or trioxane or copolymers comprising formaldehyde or trioxane as the main component and one or more comonomers selected from among cyclic ethers and cyclic formals such as ethylene oxide, propylene oxide, oxetane, dioxolane, dioxepane, trioxepane and formal of butanediol.

The silicon-containing polyacetal copolymers (C) may be prepared by a known polyacetal polymerization process such as a process wherein a terminal-reactive silicone oil of the general formula [I] in an amount of at least 0.01 wt.% based on the total reactive monomers is copolymerized with formaldehyde or trioxane under heating in the presence of a catalyst; or a process wherein formaldehyde or trioxane as the main component is copolymerized with one or more comonomers selected from the group consisting of cyclic ethers and cyclic formals such as ethylene oxide, propylene oxide, oxetane, dioxolane, dioxepane, trioxepane and formal of butanediol and the terminal-reactive silicone oil of the general formula [I] under heating in the presence of a catalyst. Paraformaldehyde can also be used as the material for feeding formaldehyde.

The terminal-reactive silicone oils used in the present invention are those represented by the above general formula [I]. They are used either alone or in combination of two or more of them.

When X in the above general formula [I] is a group other than 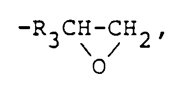
the copolymer obtained is a block copolymer or a comblike graft copolymer.

When X is 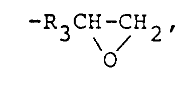
namely when the silicone oil has glycidyl groups at both ends, a graft copolymer comprising polyacetal segments crosslinked with a siloxane segment is obtained. A particularly preferred silicone oil is a polydimethylsiloxane diglycidyl ether of the general formula [I] wherein R ₁ represents a methyl group and R₂ and R₃ each represent -CH₂-, -OCH₂-, -CH₂CH₂CH₂OCH₂- or the like which has a degree of polymerization of 5 to 1,000, preferably 10 to 500.

In the formula [I], it is preferable that R ₁ represents an alkyl group with 1 to 4 carbon atoms, especially 1 or 2, most preferably methyl; R ₂ and R₃ each represent a group of the formula -R ₁₀-Y-R₁₁ in which R₁₀ and R₁₁ each represent an alkyl group with 1 to 6 carbon atoms and Y represents oxygen or sulphur, or R₂ and R₃ each represent an alkylene group with 1 to 12 carbon atoms or an oxyalkylene group with 1 to 12 carbon atoms.

The weight ratio of the above-described terminal-reactive silicone oil to the monomer constituting the polyacetal segment is 0.01 to 30/99.99 to 70, preferably 0.02 to 20/99.98 to 80.

The silicon-containing polyacetal copolymer (C) of the present invention is produced under the same conditions as those of known processes for producing polyacetals in the presence of the same catalyst as that of the latter processes.

In a particularly preferred embodiment of the process, trioxane as the main monomer is reacted with a small amount of a cyclic ether or a cyclic formal as the comonomer and polydimethylsiloxane diglycidyl ether in the presence of a cationic active catalyst such as boron trifluoride or a complex compound thereof at 60 to 150°C.

A known polymerization regulator such as dimethyl acetal can be used in the production of the silicon-containing polyacetal copolymer (C) within the scope of the present invention.

As the measure of the evaluation of the compatibility of the polymers, the solubility parameter δ is widely employed. This method is described in detail in many books (see, for example, "Polymer Handbook", the Second Edition, IV, page 349).

As is well known, δ represents a cohesive strength of molecules of the same compound. In a mixture which satisfies the following formula [II]:

$\text{| δ ₁ - δ ₂ | ≃ 0 [II]}$

wherein δ ₁ and δ ₂ represent solubility parameters of different substances from each other,
swelling or dissolution occurs when the mixture comprises a combination of a high-molecular compound and a low-molecular compound, and a stable dispersion is kept by mechanical stirring when the mixture comprises a combination of high molecular compounds with each other. In both mixtures, the affinity is strong and any phase separation phenomenon scarcely occurs. When the value of the formula [II] exceeds 1, usually a phase separation phenomenon occurs so that no stable, homogeneous dispersion can be easily obtained.

An object of the present invention is to make it possible to effectively prepare a homogeneous dispersion comprising at least a substance (A) having δ of at least 9.5 cal^{1/2}cm^{-3/2} with a substance (B) having δ not higher than 8.5 cal^{1/2}cm^{-3/2}.

The components (A) having δ of at least 9.5 cal^{1/2}cm^{-3/2} used in the present invention are preferably thermoplastic resins, and are preferably selected from the group consisting of, for example, polyesters, polyamides, polyesteramides, polyurethanes, polyvinyl chloride, polycarbonates, polyvinylidene chloride, polyacrylonitrile, polyacetals, polymethacrylonitrile, polymethyl acrylate, polyvinyl alcohol, cellulose, and derivatives of them. They may be used either singly or in combination of two of more of them.

Among them, preferred are polyacetals, polyesters, polyamides, polyesteramides and polyurethanes.

Among them, most preferred are homopolymers and copolymers comprising polyoxymethylene units as the main skeleton.

The ratios of the components of the composition of the present invention are as follows: the weight ratio of (A) to (B) is not particularly limited so far as the component (B) is substantially present even in a very small amount. Usually the ratio of (A) to (B) is 99.9 to 85/0.1 to 15. The amount of the component (C) is 0.01 to 5 parts by weight, particularly preferably 0.1 to 2 parts by weight, for 100 parts by weight in total of components (A) and (B).

When the amount of the component (B) is less than the above-described range, the characteristic features of the modifier cannot be easily obtained and, on the contrary, when it exceeds that range, the physical properties of the resin component (A) are excessively modified to make the homogeneous dispersion thereof difficult unfavorably. When the amount of the component (C) is insufficient, no satisfactory homogeneous dispersibility can be obtained.

The resin composition of the present invention can be homogeneously mixed and dispersed with an ordinary apparatus for dissolving and kneading thermoplastic resins, such as an extruder, and it can be easily molded with a molding machine by an ordinary method.

The composition of the present invention is produced by mixing a synthetic resin with another substance having a δ (cal^{1/2}cm^{-3/2}) value different from that of the synthetic resin and therefore difficultly dispersible in the resin, in the presence of a special siloxane copolymer (C) to form a homogeneous dispersion. By this process, compounds having a δ value of less than 8.5 cal^{1/2}cm^{-3/2} and substantially incompatible with the base polymer can be quite easily dispersed and the bleeding in the course of the molding or after the molding can be prevented. Further by this process, high toughness and abrasion resistance can be imparted to the moldings without causing any surface peeling phenomenon. The thermoplastic resin composition of the present invention thus having excellent properties can be used for various purposes. Namely, they are usable as structural materials such as outside plates of automobiles of which excellent physical and mechanical properties such as impact resistance are required and as materials for parts of precision instruments such as key tops and gears as well as electric components of which excellent abrasion resistance and sliding resistance are required.

### [Examples]

The following Examples will further illustrate the present invention. Referential Examples of the processes for producing the Polymer (C) containing a siloxane segment will be also given.

### Referential Example 1

0.02 part by weight of polydimethylsiloxane diglycidyl ether [number-average degree of polymerization: about 25] having glycidyl groups at both ends as the terminal-reactive silicone oil was added to a mixture of 98 parts by weight of trioxane with 2 parts by weight of ethylene oxide. The mixture was heated to 65°C under thorough stirring. Then a given amount of boron trifluoride/ethyl ether complex was added thereto and the polymerization was conducted at 60 to 100°C.

As the polymerization proceeded, the reaction system became milky and solidified. After 40 minutes, an aqueous alcohol solution containing a small amount of triethylamine was added thereto to terminate the reaction. The product was pulverized and thrown into acetone containing a small amount of triethylamine to wash it thoroughly. The product was air-dried and stabilized in the same manner as that employed in the production of the polyacetal resin.

### Referential Example 2

The same procedure as that of Referential Example 1 was repeated except that 3 parts by weight of polydimethylsiloxane diglycidyl ether [number-average degree of polymerization: about 50] having glycidyl groups at both ends as the terminal-reactive silicone oil was added to a mixture of 98 parts by weight of trioxane with 2 parts by weight of ethylene oxide to prepare a silicon-containing polyacetal copolymer.

### Referential Example 3

The same procedure as that of Referential Example 1 or 2 was repeated except that 3 parts by weight of polydimethylsiloxane monoglycidyl ether [number-average degree of polymerization: about 500] having a methyl group at an end (X) as the terminal-reactive silicone oil was added to a mixture of 98 parts by weight of trioxane with 2 parts by weight of ethylene oxide to give a silicon-containing polyacetal copolymer.

### Referential Example 4

The same procedure as that of Referential Example 3 was repeated except that 97 parts by weight of trioxane, 3 parts by weight of dioxolane and 10 parts by weight of the same silicone oil as that used in Referential Example 3 were used to give a silicon-containing polyacetal copolymer.

### Referential Example 5

The same procedure as that of the above-described Referential Examples was repeated except that 97 parts by weight of trioxane, 3 parts by weight of dioxolane and 20 parts by weight of polydimethylsiloxane monoglycidyl ether [number-average degree of polymerization: about 300] having -OCH₃ at an end (X) as the terminal-reactive silicone oil were used to give a silicon-containing polyacetal copolymer.

### Example 1 and Comparative Example 1

A polyacetal resin (POM) (Duracon M90 (Trade Mark); a product of Polyplastics Co.) as the component (A), a silicone oil (SH-200; a product of Toray Silicone Co.) as the component (B) and a silicon-containing polyacetal copolymer prepared in Referential Example 1, 2 or 3 as the component (C) were kneaded together each in an amount shown in the following table with an extruder at 220°C. The composition was thus pelletized. The pellets were freeze-broken with liquid nitrogen. The fracture of the obtained resin composition was observed with a scanning electron microscope to find out that the silicon oil was homogeneously dispersed. The resin composition was injection-molded to form test pieces. After leaving the test pieces to stand at 80°C for one month, no bleeding of the oil was substantially observed on the surface. The coefficient of dynamic friction was determined according to ASTM D 1894. The test pieces having a size of 100 x 25 x 3 mm were repeatedly bent at an angle of 90° at room temperature according to JIS Z-2248, the internal bending radius being 1 mm. Even after repeating the bending 24 times, no delamination was observed on the bent surface. The same test pieces as above were subjected to extraction with acetone at room temperature for 1 h. The results are shown in the following table.

The same composition as that of Example 1 except that no component (C) was contained was prepared and the test pieces thereof were subjected to the same test as above. The bleeding of the oil was recognized on the surfaces of the test pieces. The results are also shown in the following table.

### Examples 2 and 3 and Comparative Example 2

The same procedure as that of Example 1 was repeated except that the silicone oil used as the component (B) was replaced with fluorocarbon oil or polytetrafluoroethylene (PTFE) and that the silicon-containing polyacetal copolymer prepared in Referential Example 4 was used as the component (C). The dispersibility was excellent and the bleeding on the surface was scarcely observed. Other results are shown in the following table.

The same procedure as that of Example 3 was repeated except that the composition free of the silicon-containing polyacetal copolymer was used. The results are shown in the following table as those of Comparative Example 2.

### Examples 4 to 6 and Comparative Example 3

The same procedure as above was repeated except that polybutylene terephthalate (PBT) was used as the base polymer, i.e. component (A), the same substance as that used in Example 1, 2 or 3 was used as the component (B) and the silicon-containing polyacetal copolymer prepared in Referential Example 5 was used as the component (C) [in Comparative Example 3, the same procedure as in Example 4 was repeated except that no component (C) was used]. As for the effects of them, the homogeneous dispersion could be obtained in all the cases excluding that of Comparative Example 3. Other results are shown in the following table.

### Example 7 and Comparative Example 4

An epoxy resin hardener ( Tohmide#255 (Trade Mark); a product of Fuji Kasei Co.) as the component (A) was heated to melt together with the silicon-containing polyacetal copolymer prepared in Referential Example 4 as the component (C) to form a homogeneous dispersion, which was left to cool. An epoxy resin (Epikote (Trade Mark) #828; a product of Yuka Shell Co.) as the component (A) and a silicone oil (Silicone Oil SH-200; a product of Toray Silicone Co.) as the component (B) were added to the dispersion and they were thoroughly mixed. The mixture was cast and hardened at 100°C for 3 h. The characteristic values of the hardened product are also shown in the following table.

The epoxy resin was hardened under the same conditions as in Example 4 except that the silicon-containing polyacetal copolymer as the component (C) was not used and the characteristic values thereof were determined. The results are shown in the following table.

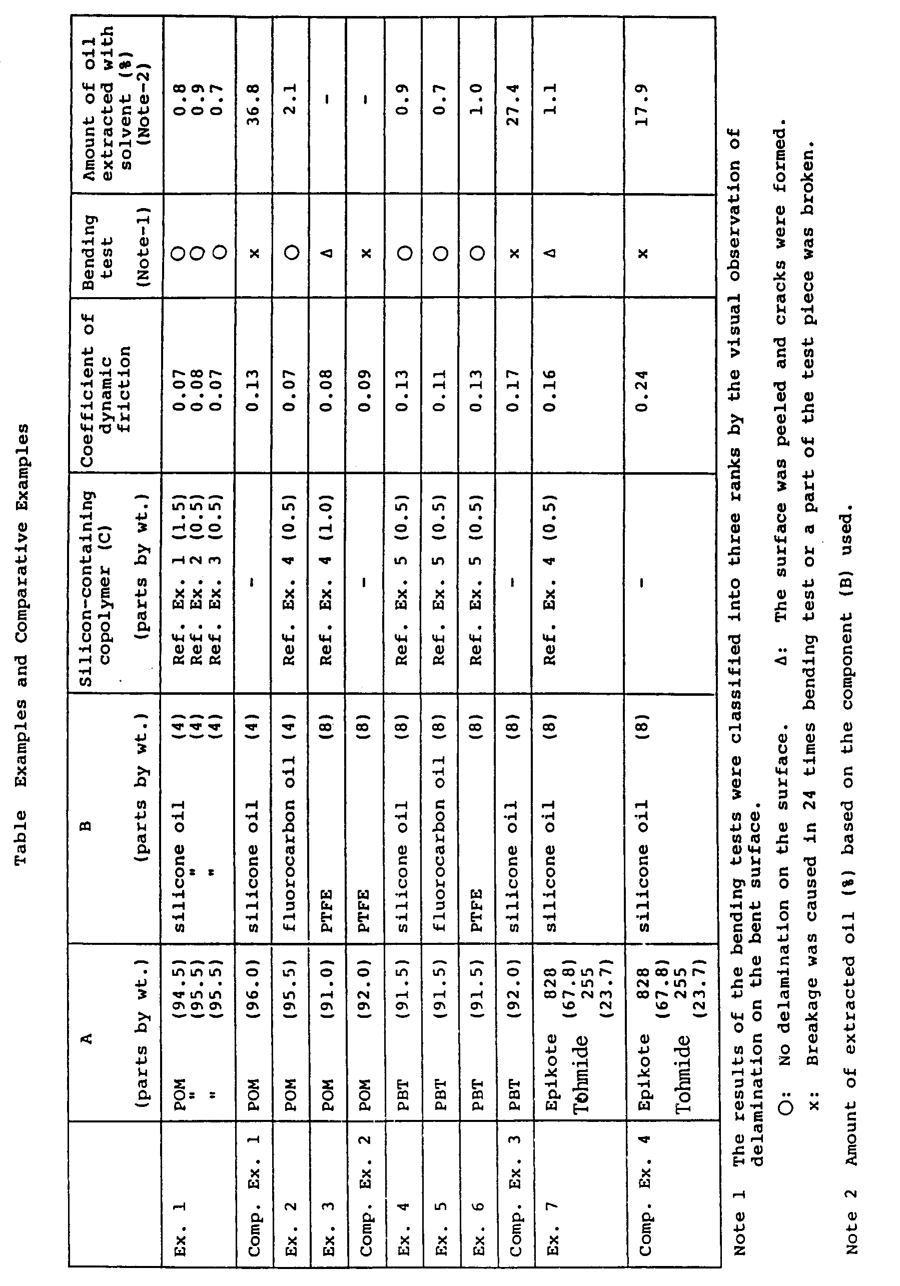

## Claims

1. A resin composition comprising a resin (A) having a solubility parameter δ of at least 9.5 cal^{1/2}.cm^{-3/2} in which a modifier (B) having a solubility parameter δ of not higher than 8.5 cal^{1/2}.cm^{-3/2} is dispersed to form a dispersion, characterized by containing a dispersibility improver (C) comprising a silicon-containing polyacetal copolymer prepared by covalently bonding 0.01 to 30 wt. % of a terminal-reactive silicone oil of the following general formula [I]: 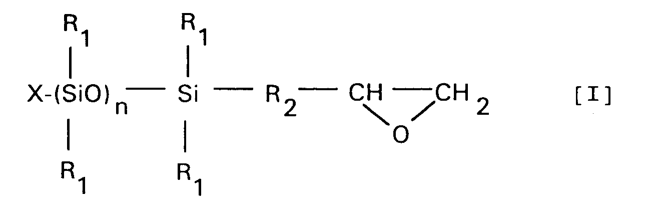 wherein R₁ represents an alkyl or phenyl group,
R₂ represents a divalent organic group,
X represents a group selected from the group consisting of -NH₂, -OH, 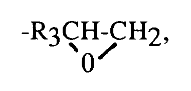 -R₄OH, -R₅COOH, -R₆COOR₇, -R₈ and -OR₉,
R₃ represents a divalent organic group,
R₄ to R₆ each represent an alkylene group having 1 to 10 carbon atoms,
R₇ to R₉ each represent an alkyl group having 1 to 10 carbon atoms and n represents a number of 5 to 1000,
with 99.99 to 70 wt. % of a polyacetal segment which is other than resin (A) and other than modifier (B), the degree of polymerization of the siloxane segment (n in the formula [I]) being 5 to 1,000 and the degree of polymerization of the polyacetal segment being 5 to 2,000, in which the weight ratio of (A) to (B) is 99.9 to 85/0.1 to 15 and the amount of (C) is 0.01 to 5 parts by weight for 100 parts by weight in total of (A) and (B) and wherein the modifier (B) is one or more homopolymers selected from the group consisting of polytetrafluoroethylene, polychlorotrifluoroethylene, fluororubber, polydimethylsilicone, polyalkylsiloxanes, polyphenylsiloxane, silicone rubber, butyl rubber, polyisobutylene, polyethylene, ethylene/propylene rubber and polypropylene and/or a copolymer comprising at least one of the monomer units forming these polymers, or a fluorocarbon oil, silicone oil or mineral oil having a molecular weight of 200,000 or less.

2. A resin composition according to claim 1, wherein said resin (A) is a thermoplastic resin.

3. A resin composition according to claim 1 or 2, wherein the resin (A) is one or more resins selected from the group consisting of polyesters, polyamides, polyesteramides, polyurethanes, polyvinyl chloride, polycarbonates, polyacetals, polyvinylidene chloride, polyacrylonitrile, polymethacrylonitrile, polymethyl acrylate, polyvinyl alcohol, cellulose, and derivatives of them.

4. A resin composition according to claim 3, wherein the resin (A) is at least one polymer selected from the group consisting of polyacetals, polyesters and polyamides.

5. A resin composition according to claim 4, wherein the resin (A) is a polyacetal homopolymer or copolymer comprising polyoxymethylene units as the main skeleton.

6. A resin composition according to any preceding claim, wherein in the formula [I] for the terminal-reactive silicone oil used to prepare the silicon-containing polyacetal copolymer (C), R₁ represents an alkyl group with 1 to 4 carbon atoms, R₂ and R₃ each represent a group of the formula -R₁₀-Y-R₁₁- in which R₁₀ and R₁₁, each represent an alkyl group with 1 to 6 carbon atoms and Y represents oxygen or sulphur, or R₂ and R₃ each represent an alkylene group with 1 to 12 carbon atoms or an oxyalkylene group with 1 to 12 carbon atoms.

7. A resin composition according to claim 6, wherein in the formula [I] for the terminal-active silicone oil used to prepare the silicon-containing polyacetal copolymer (C), R₁ represents a methyl group and R₂ and R₃ each represent a -CH₂-, -OCH₂-, -CH₂CH₂CH₂OCH₂- group which has a degree of polymerisation of 5 to 1000.

8. A resin composition according to any preceding claim, wherein in the silicon-containing polyacetal copolymer(C) the weight ratio of the terminal-reactive silicone oil to the polyacetal segment is (0.01 to 30)/(99.99 to 70).

9. A resin composition according to any preceding claim, wherein the amount of the silicon-containing polyacetal copolymer(C) is 0.1 to 2 parts by weight for 100 parts by weight in total of the thermoplastic resin (A) and the modifier (B).

## Patentansprüche

1. Harzzusammensetzung, umfassend ein Harz (A) mit einem Löslichkeitsparameter δ von wenigstens 9,5 cal^{1/2}·cm^{-3/2}, worin ein Modifikationsmittel (B) mit einem Löslichkeitsparameter δ von nicht mehr als 8,5 cal^{1/2}·cm^{-3/2} dispergiert ist, um eine Dispersion zu bilden, dadurch gekennzeichnet, daß sie ein dispergierbarkeitsförderndes Mittel (C) enthält, umfassend ein Silicium-haltiges Polyacetal-Copolymer, das hergestellt wird durch covalentes Binden von 0,01 bis 30 Gew.-% eines terminal reaktiven Siliconöls der folgenden allgemeinen Formel (I): 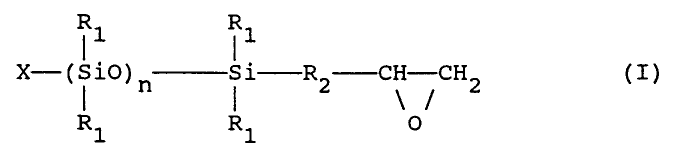 worin R₁ eine Alkyl- oder Phenyl-Gruppe darstellt, R₂ eine divalente organische Gruppe darstellt, X eine Gruppe darstellt, ausgewählt aus der Gruppe bestehend aus -NH₂, -OH, 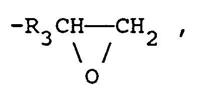 -R₄OH, -R₅COOH, -R₆COOOR₇, -R₈ und OR₉,
R₃ eine divalente organische Gruppe darstellt,
R₄ bis R₆ jeweils Alkylen-Gruppen mit 1 bis 10 Kohlenstoff-Atomen darstellen,
R₇ bis R₉ jeweils Alkyl-Gruppen mit 1 bis 10 Kohlenstoff-Atomen darstellen, und
n eine Zahl von 5 bis 1000 bezeichnet,
mit 99,99 bis 70 Gew.-% eines Polyacetal-Abschnitts, der von Harz (A) und Modifikationsmittel (B) verschieden ist, wobei der Polymerisationsgrad des Siloxan-Abschnitts [n in Formel (I)] 5 bis 1000 ist und der Polymeriationsgrad des Polyacetal-Abschnitts 5 bis 2000 ist, wobei das Gewichtsverhältnis von (A) zu (B) 99,9 bis 85 zu 0,1 bis 15 ist, und die Menge an (C) 0,01 bis 5 Gewichtsteile pro 100 Gewichtsteile von (A) und (B) insgesamt beträgt, und wobei es sich bei dem Modifikationsmittel (B) um eines oder mehrere Homopolymere handelt, ausgewählt aus der Gruppe bestehend aus Polytetrafluorethylen, Polychlortrifluorethylen, Fluorkautschuk, Polydimethylsilicon, Polyalkylsiloxanen, Polyphenylsiloxanen, Siliconkautschuk, Butylkautschuk, Polyisobutylen, Polyethylen, Ethylen/Propylen-Kautschuk und Polypropylen und/oder ein Copolymer, umfassend wenigstens eine der diese Polymere bildenden Monomereinheiten, oder einem Fluorkohlenwasserstoff-Öl, Siliconöl oder Mineralöl mit einem Molekulargewicht von 200 000 oder darunter.

2. Harzzusammensetzung nach Anspruch 1, wobei das Harz (A) ein thermoplastisches Harz ist.

3. Harzzusammensetzung nach Anspruch 1 oder 2, wobei es sich bei dem Harz (A) um eines oder mehrere Harze handelt, ausgewählt aus der Gruppe bestehend aus Polyestern, Polyamiden, Polyesteramiden, Polyurethanen, Polyvinylchlorid, Polycarbonaten, Polyacetalen, Polyvinylidenchlorid, Polyacrylnitril, Polymethacrylnitril, Polymethylacrylat, Polyvinylalkohol, Cellulose und Derivaten derselben.

4. Harzzusammensetzung nach Anspruch 3, wobei es sich bei dem Harz (A) um wenigstens ein Polymer handelt, ausgewählt aus der Gruppe bestehend aus Polyacetalen, Polyestern und Polyamiden.

5. Harzzusammensetzung nach Anspruch 4, wobei das Harz (A) ein Polyacetal-Homopolymer oder Copolymer ist, umfassend Polyoxymethylen-Einheiten als Hauptgerüst.

6. Harzzusammensetzung nach irgendeinem der vorstehenden Ansprüche, wobei in Formel (I) für das zur Herstellung des Silicium-haltigen Polyacetal-Copolymers (C) verwendete terminal reaktive Siliconöl R₁ eine Alkyl-Gruppe mit 1 bis 4 Kohlenstoff-Atomen darstellt, R₂ und R₃ jeweils eine Gruppe der Formel -R₁₀-Y-R₁₁- darstellen, worin R₁₀ und R₁₁ jeweils eine Alkyl-Gruppe mit 1 bis 6 Kohlenstoff-Atomen darstellen, und Y Sauerstof oder Schwefel bedeutet, oder R₂ und R₃ jeweils eine Alkylen-Gruppe mit 1 bis 12 Kohlenstoff-Atomen oder eine Oxyalkylen-Gruppe mit 1 bis 12 Kohlenstoff-Atomen bedeuten.

7. Harzzusammensetzung nach Anspruch 6, wobei in Formel (I) für das zur Herstellung des Silicium-haltigen Polyacetal-Copolymers (c) verwendete terminal reaktive Siliconöl, das einen Polymerisationsgrad von 5 bis 1000 aufweist, R₁ eine Methyl-Gruppe bedeutet, und R₂ und R₃ jeweils eine -CH₂-, -OCH₂-, -CH₂CH₂CH₂OCH₂-Gruppe darstellen.

8. Harzzusammensetzung nach irgendeinem der vorstehenden Ansprüche, wobei im Silicium-haltigen Polyacetal-Copolymer (C) das Gewichtsverhältnis von terminal reaktivem Siliconöl zu Polyacetal-Abschnitt (0,01 bis 30)/(99,99 bis 70) ist.

9. Harzzusammensetzung nach irgendeinem der vorstehenden Ansprüche, wobei die Menge an Silicium-haltigem Polyacetal-Copolymer (C) 0,1 bis 2 Gewichtsteile pro 100 Gewichtsteile thermoplastisches Harz (A) und Modifikationsmittel (B) insgesamt beträgt.

## Revendications

1. Composition de résine qui comprend une résine (A) ayant un coefficient de solubilité δ d'au moins 9,5 cal^{1/2}.cm^{-3/2} dans laquelle a été dispersé un agent modifiant (B) ayant un coefficient de solubilité δ d'au plus 8,5 cal^{1/2}.cm^{-3/2} afin de former une dispersion, caractérisée en ce qu'elle contient un agent (C) améliorant la dispersibilité comprenant un copolymère de polyacétal contenant du silicium obtenu en liant par covalence 0,01 à 30 % en poids d'une huile de silicone à groupement terminal réactif de la formule générale (I) : 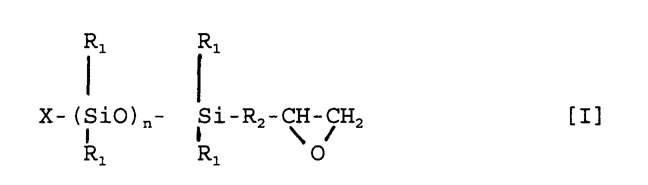 où R₁ désigne un groupement alkyle ou phényle
R₂ désigne un groupement organique bivalent,
X désigne un groupement choisi dans le groupe constitué de -NH₂,-OH, 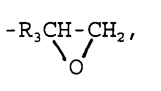 -R₄OH, -R₅COOH, -R₆COOR₇, -R₈ et -OR₉.
R₃ représente un groupement organique bivalent,
R₄ à R₆ représente chacun un groupement alkylène ayant de 1 à 10 atomes de carbone,
R₇ à R₉ représente chacun un groupement alkyle ayant de 1 à 10 atomes de carbone,
et n représente un nombre de 5 à 1000,
avec 99,99% à 70% en poids d'un segment polyacétal qui est différent de la résine (A) et de l'agent modifiant (B), le degré de polymérisation du segment siloxane (représenté par n dans la formule (I)) étant de 5 à 1000 et le degré de polymérisation du segment polyacétal étant de 5 à 2000;
composition dans laquelle le rapport pondéral de (A) à (B) est de 99,9 à 85/0,1 à 15 et la quantité de (C) est de 0,01 à 5 parties en poids pour 100 parties en poids du total de (A) et (B) et l'agent modifiant (B) est un ou plusieurs homopolymères choisis dans le groupe comprenant le polytétrafluoroéthylène, le polychlorotrifluoroéthylène, le caoutchouc fluoré, la polydiméthylsilicone, les polyalkylsiloxanes, le polyphénylsiloxane, le caoutchouc de silicone, le caoutchouc butyle, le polyisobutylène, le polyéthylène, le caoutchouc éthylène/propylène et le polypropylène et/ou un copolymère contenant au moins l'un des monomères constituant ces polymères, ou une huile de fluocarbure, une huile de silicone ou une huile minérale ayant un poids moléculaire de 200 000 ou moins.

2. Composition de résine selon la revendication 1, dans laquelle ladite résine (A) est une résine thermoplastique.

3. Composition de résine selon la revendication 1 ou 2, dans laquelle la résine (A) est une ou plusieurs résines choisies dans le groupe comprenant les polyesters, les polyamides, les polyesteramides, les polyuréthanes, le chlorure de polyvinyle, les polycarbonates, les polyacétals, le chlorure de polyvinylidène, le polyacrylonitrile, le polyméthacrylonitrile, le polyacrylate de méthyle, l'alcool polyvinylique, le cellulose, et leurs dérivés.

4. Composition de résine selon la revendication 3, dans laquelle la résine (A) est au moins un polymère choisi dans le groupe comprenant les polyacétals, les polyesters et les polyamides.

5. Composition de résine selon la revendication 4, dans laquelle la résine (A) est un homopolymère polyacétal ou un copolymère comprenant des unités polyoxyméthylène comme chaîne principale.

6. Composition de résine selon l'une quelconque des revendications qui précèdent, dans laquelle, dans la formule (I) représentant l'huile de silicone à groupement terminal réactif utilisée pour préparer le copolymère de polyacétal contenant du silicium (C), R₁ désigne un groupement alkyle ayant de 1 à 4 atomes de carbone, R₂ et R₃ désignent chacun un groupement de la formule -R₁₀-Y-R₁₁-dans laquelle R₁₀ et R₁₁ désignent chacun un groupement alkyle ayant de 1 à 6 atomes de carbone et Y désigne un atome d'oxygène ou de soufre, ou bien R₂ et R₃ désignent chacun un groupement alkylène ayant de 1 à 12 atomes de carbone ou un groupement oxyalkylène ayant de 1 à 12 atomes de carbone.

7. Composition de résine selon la revendication 6 dans laquelle, dans la formule (I) représentant l'huile de silicone à groupement terminal réactif utilisée pour préparer le copolymère de polyacétal (C) contenant du silicium, R₁ représente un groupement méthyle et R₂ et R₃ désignent chacun un groupement -CH₂, -OCH₂, -CH₂-CH₂-CH₂-OCH₂- qui a un degré de polymérisation est compris de 5 à 1000.

8. Composition selon l'une quelconque des revendications précédentes, dans laquelle, dans le copolymère de polyacétal (C) contenant du silicium, le rapport pondéral de l'huile de silicone à groupement terminal réactif au segment polyacétal est de (0,01 à 30)/(99,99 à 70).

9. Composition de résine selon l'une quelconque des revendications précédentes, dans laquelle la quantité de copolymère de polyacétal contenant du silicium (C) représente de 0,1 à 2 parties en poids pour 100 parties en poids du total de la résine thermoplastique (A) et de l'agent modifiant (B).
